# EUROPÄISCHE PATENTSCHRIFT

(11) **EP 1 886 518 B1**
(45) Veröffentlichungstag und Bekanntmachung des Hinweises auf die Patenterteilung: **16.03.2011**
(21) Anmeldenummer: 06807283.4
(22) Anmeldetag: 16.10.2006
(51) Int. Cl.: H04W 12/06

(54) **VERFAHREN ZUR AUFNAHME EINES FUNKMODULS IN EIN FUNKNETZ MIT ZUGANGSBERECHTIGUNGSPRÜFUNG UND FUNKMODUL ZUR UNTERSTÜTZUNG DES VERFAHRENS**
METHOD FOR INCLUDING A RADIO MODULE IN A RADIO NETWORK WITH ACCESS AUTHORIZATION CHECKING AND RADIO MODULE TO SUPPORT THE METHOD
PROCEDE POUR L'ADMISSION D'UN MODULE RADIO DANS UN RESEAU RADIO AVEC CONTRÔLE D'AUTORISATION D'ACCES ET MODULE RADIO POUR LA MISE EN OEUVRE DU PROCEDE

(30) Priorität: 16.12.2005 DE 102005060351
(43) Veröffentlichungstag der Anmeldung: 13.02.2008
(73) Patentinhaber: Cinterion Wireless Modules GmbH, 81669 München (DE)
(72) Erfinder: BARAN, Marian, 12114 Berlin (DE); DUMMANN, Uwe, 16341 Panketal/ot Zepernick (DE)
(74) Vertreter: Eisenführ, Speiser & Partner
(86) Internationale Anmeldenummer: PCT/EP2006/067424
(87) Internationale Veröffentlichungsnummer: WO 2007/071472

(56) Entgegenhaltungen:
- EP-A- 1 039 770
- WO-A2-02/35870
- DE-A1- 10 151 677
- DE-C1- 19 722 181
- US-A- 5 854 976
- US-A1- 2001 027 528

## Beschreibung

Die Erfindung betrifft ein Verfahren gemäß dem Oberbegriff des Anspruchs 1 sowie ein Funkmodul gemäß dem Oberbegriff des Anspruchs 3.

In DE 197 22 181 C1 ist eine Kraftfahrzeugeinbauvorrichtung für ein Mobiltelefon beschrieben, die eine Speichereinrichtung zum Speichern eines die Benutzungsfreigabe des Mobiltelefons bestimmenden Identifizierungscodes und eine Einrichtung zum Erfassen eines Freigabesignals von dem Kraftfahrzeug sowie eine Codesignalübertragungs/Empfangseinrichtung aufweist. Letztere übermittelt auf Anforderung dem Mobiltelefon den gespeicherten Identifizierungscode in Abhängigkeit von dem erfassten Freigabesignal von dem Fahrzeug. Die Kraftfahrzeugeinbauvorrichtung wird an geeigneter Stelle innerhalb des Fahrzeugs installiert und weist eine an sich bekannte Halterung zur Aufnahme des Mobiltelefons sowie Kontakte zum Austausch von Signalen zwischen dem Mobiltelefon und der Kraftfahrzeugeinbauvorrichtung auf.

Für bestimmte Anwendungen wie z.B. zur Fernsteuerung, Fernüberwachung, Ferneinstellung oder Fernmessung werden spezielle Mobilfunkendgeräte, so genannte Mobilfunkmodule, verwendet, die typischerweise über keine Einrichtungen (Tastatur, Anzeigeeinrichtung, etc.) zur Handhabung oder Bedienung durch einen menschlichen Benutzer verfügen, die denen eines Mobiltelefons vergleichbar wären. Solche Mobilfunkmodule verfügen stattdessen normalerweise über Schnittstellen zu anderen Geräten oder Anlagen, die sie überwachen oder steuern oder ähnliche Einrichtungen.

Aus Gründen der Kompatibilität zu existierenden oder künftigen Mobilfunkstandards für Funknetze, in denen diese Mobilfunkmodule betrieben werden sollen, verfügen diese Mobilfunkmodule allerdings regelmäßig über ein Teilnehmeridentifikationsmodul, das normalerweise als SIM oder SIM-Karte, oder auch als USIM, etc. bezeichnet wird. Solche Teilnehmeridentifikationsmodule sind normalerweise als Chipkarten ausgestaltet, auf denen Daten und Algorithmen gespeichert sind, die zur Aufnahme des Mobilfunkmoduls in ein Funknetz mit Zugangsberechtigungsprüfung erforderlich sind. Damit ein Missbrauch eines Funkmoduls oder eines Teilnehmeridentifikationsmoduls durch unberechtigte Dritte ausgeschlossen ist oder zumindest sehr erschwert wird, sehen die Mobilfunkstandards für solche Funknetze vor, dass die Aufnahmeprozedur nur ablaufen kann, wenn das Teilnehmeridentifikationsmodul des Mobilfunkmoduls zuvor durch Eingabe einer Benutzeridentifikationskennung, die meist als PIN bezeichnet wird, aktiviert wurde. Dieses Verfahren hat sich im zusammenhang mit Mobiltelefonen, die ja von einem menschlichen Benutzer bedient und verwendet werden, bewährt und bereitet normalerweise keine Probleme, weil die Eingabe einer Benutzeridentifikationskennung zur Aktivierung des Teilnehmeridentifikationsmoduls z.B. über die Tatstatur des Mobiltelefons leicht erfolgen kann.

Im Fall der Verwendung von Mobilfunkmodulen für bestimmte Anwendungen wie z.B. zur Fernsteuerung, Fernüberwachung, Ferneinstellung oder Fernmessung ist jedoch normalerweise kein menschlicher Benutzer in der Nähe, der die Benutzeridentifikationskennung zur Aktivierung des Teilnehmeridentifikationsmoduls eingeben könnte. Aus demselben Grund ist auch üblicherweise keine Tastatur vorhanden.

Die Benutzeridentifikationskennung in einer Speichereinrichtung des Mobilfunkmoduls zu speichern ist nach den meisten Mobilfunkstandards aus Sicherheitsgründen untersagt.

Aus dem Dokument WO 02/35870 A2 ist ein Mobiltelefon bekannt, das ohne Nummerntastatur betrieben wird. Das Telefon kann Verbindungen lediglich zu Rufnummern aufbauen, die auf der SIM-Karte des Mobiltelefons, gespeichert sind. Die SIM-Karte enthält keine gespeicherte Benutzeridentifikationskennung. Die Anmeldung bei einem Mobilfunk-Netzwerk wird durch eine vorherige Speicherung von Identifikationsdaten in eine Datenbank des Netzwerks ermöglicht. Das Mobiltelefon wird daher anhand seiner eingespeicherten Identifikationsdaten beim Netzwerk identifiziert.

Der vorliegenden Erfindung liegt daher die Aufgabe zugrunde, eine standardkonforme und möglichst sichere technische Lösung für das geschilderte Problem anzugeben. Diese Aufgabe wird durch die Gegenstände der Patentansprüche gelöst.

Im folgenden wird die Erfindung anhand bevorzugter Ausführungsbeispiele und mit Hilfe von Figuren beschrieben:

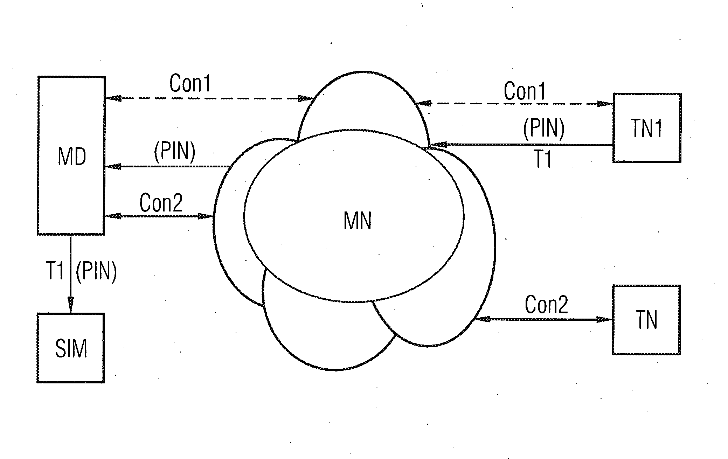

Figur 1 zeigt in schematischer Weise vorteilhafte Ausführungsformen der vorliegenden Erfindung.

Eine vorteilhafte Ausführungsform der Erfindung kann durch ein Verfahren zur Aufnahme eines Funkmoduls (MD) in ein Funknetz (MN) mit Zugangsberechtigungsprüfung charakterisiert werden, bei dem für diese Zugangsberechtigungsprüfung ein Teilnehmeridentifikationsmodul (SIM) verwendet wird, das aktivierbar ist ohne Eingabe einer Benutzeridentifikationskennung (PIN) durch einen Benutzer über eine lokale Eingabeeinrichtung des Funkmoduls.

Diese noch recht allgemeine Charakterisierung der Erfindung umfasst Ausführungsformen, bei denen bei denen zur Aktivierung des Teilnehmeridentifikationsmoduls (SIM) die Benutzeridentifikationskennung (PIN) über einen anderen Weg als über eine lokale Eingabeeinrichtung des Funkmoduls zugeführt wird.

Die vorliegende Erfindung sieht mehrere Lösungsmöglichkeiten vor, die jeweils mit individuellen von der jeweiligen Anwendung abhängigen Vorteilen verbunden sind.

Eine Möglichkeit besteht darin, eine Verbindung (Conl) zu einer ersten Gegenstelle (TNI) aufzubauen, die eine Benutzeridentifikationskennung (PIN) an das anrufende Funkmodul (MD) übermittelt, und bei dem diese übermittelte Benutzeridentifikationskennung (PIN) zur Aktivierung des Teilnehmeridentifikationsmoduls (SIM) für Verbindungsaufbauten zu anderen Gegenstellen (TN) verwendet wird (Figur 1) . Dabei kann es sich, je nach dem Sicherheitsbedürfnis des Anwenders, um eine geschlossene Gruppe von Gegenstellen (TN) handeln oder - dazu alternativ - um beliebige über das Funknetz erreichbare Gegenstellen. Die Benutzeridentifikationskennung (PIN) kann dabei in verschlüsselter Form an das Funkmodul (MD) übertragen werden, wobei die Schlüsselalgorithmen und/oder Schlüssel grundsätzlich auf dem Funkmodul (MD) oder auf dem Teilnehmeridentifikationsmodul (SIM) gespeichert sein können bzw. durch Prozessoren des Funkmoduls (MD) oder des Teilnehmeride.ntifikationsmoduls (SIM) verarbeitet werden können. Mit einer Auslagerung dieser Vorgänge auf das Teilnehmeridentifikationsmodul (SIM) wäre allerdings eine größere Flexibilität (leichtere Austauschbarkeit) jedoch möglicherweise auch eine Einbuße bei der Sicherheit verbunden. Die Entscheidung für die eine oder andere Möglichkeit trifft der Fachmann in Anbetracht der konkreten Umstände der beabsichtigten Anwendung.

Besonders leicht ließe sich diese Variante der Erfindung realisieren, wenn dafür der Notrufmechanismus verwendet würde. Dieser Notrufmechanismus sieht vor, dass jedes Funkmodul wenigstens zu einer ersten Gegenstelle (TNI) eine Verbindung ohne vorherige Aktivierung des Teilnehmer.identifikationsmoduls (SIM) mit Hilfe einer Benutzeridentifikationskennung (PIN) aufbauen kann, damit im Notfall irgend ein (fremder, eigentlich nicht berechtigter) Benutzer mit Hilfe eines Mobiltelefons eine Verbindung zu einer Notrufstation aufbauen kann und daran nicht durch den Umstand gehindert werden kann, dass er die ansonsten zum Verbindungsaufbau notwendige Benutzeridentifikatiönskennung (PIN) nicht kennt.

Bei Mobilfunkmodulen für bestimmte Anwendungen wie z.B. zur Fernsteuerung, Fernüberwachung, Ferneinstellung oder Fernmessung wird diese Notruffunktion normalerweise nicht benötigt. In diesen Fällen könnte die Notrufnummer durch die Nummer einer Gegenstelle (TNI) im Sinne der obigen Schilderung ersetzt werden, die eine Benutzeridentifikationskennung (PIN) an das anrufende Funkmodul (MD) übermittelt, das zur Aktivierung des Teilnehmeridentifikationsmoduls (SIM) für Verbindungsaufbauten zu anderen Gegenstellen (TN) verwendet werden kann.

Die angerufene Gegenstelle (TNI) kann beispielsweise auch ein Server sein, der über das Funknetz, das z.B. ein öffentliches Mobilfunknetz sein kann, erreichbar ist. Es können auch mehrere mögliche Server zur Auswahl stehen, um eine ständige Erreichbarkeit und eine kurze Antwortzeit zu gewährleisten. Dieser Server (allgemein: die angerufene Gegenstelle) erkennt das anrufende Funkmodul (MD) und übermittelt die oder eine zu dem im Zusammenhang mit diesem Funkmodul verwendeten Teilnehmeridentifikationsmodul (SIM) passende Benutzeridentifikationskennung (PIN) an das anrufende Funkmodul (MD) das diese bestimmungsgemäß zur Aktivierung des Teilnehmeridentifikationsmoduls (SIM) verwendet und danach vorzugsweise verwirft, d.h. nicht abspeichert, um in völliger Übereinstimmung mit den möglichen Vorschriften einschlägiger Mobilfunkstandards zu bleiben.

Bei einer Variante dieser Ausführungsform übermittelt der Server die Benutzeridentifikationskennung (PIN) nicht direkt an das anrufende Funkmodul (MD), sondern der Server verbindet das erkannte Funkmodul mit einem vorher festgelegten Teilnehmer oder einem gerade erreichbaren Teilnehmer aus einer vorher festgelegten Liste von Teilnehmern. Der angerufene Teilnehmer übermittelt daraufhin die Benutzeridentifikationskennung (PIN) an das anrufende Funkmodul (MD), z.B. über DTMF- Signale mit Hilfe der Eingabevorrichtung für Rufnummernwahl. Das anrufende Funkmodul (MD) verwendet diese Benutzeridentifikationskennung (PIN) daraufhin zur Aktivierung des Teilnehmeridentifikationsmoduls (SIM) . Ansonsten gilt das oben gesagte sinngemäß.

Soweit in dieser Beschreibung der Erfindung vorgeschlagen wird, ein Teilnehmeridentifikationsmodul (SIM) beschränkt o- der unbeschränkt ohne vorherige Eingabe einer Benutzeridentifikationskennung (PIN) zu aktivieren oder zu einem Verbindungsaufbau zu verwenden, kann es für bestimmte Anwendungen oder je nach dem Sicherheitsbedürfnis eines Anwenders vorteilhaft sein, dieses Teilnehmeridentifikationsmodul (SIM) einem einzigen Funkmodul (MD), mit dem es verwendet werden soll oder einer Gruppe von solchen Funkmodulen ausschließlich zuzuordnen (so genannter "SIM-Lock-Mechanismus ").

## Patentansprüche

1. Verfahren zur Aufnahme eines Funkmoduls (MD) in ein Funknetz (MN) mit Zugangsberechtigungsprüfung, bei dem für diese Zugangsberechtigungsprüfung ein Teilnehmeridentifikationsmodul (SIM) verwendet wird, das aktivierbar ist ohne Eingabe einer Benutzeridentifikationskennung (PIN) durch einen Benutzer über eine lokale Eingabeeinrichtung des Funkmoduls, wobei
zur Aufnahme des Funkmoduls in das Funknetz (MN) eine Verbindung (CON1) zu einer ersten Gegenstelle (TN1) aufgebaut wird, die eine Benutzeridentifikationskennung (PIN) an das anrufende Funkmodul (MD) übermittelt, und dass
diese übermittelte Benutzeridentifikationskennung (PIN) zur Aktivierung (T1) des Teilnehmeridentifikationsmoduls (SIM) für ein Aufbauen von Verbindungen (CON2) zu anderen Gegenstellen (TN) verwendet wird
**dadurch gekennzeichnet, dass**
die Verbindungen (CON1, CON2) zu den Gegenstellen (TN1, TN) über das Funknetz (MN) aufgebaut werden, und
(a) der Aufbau der Verbindung zur ersten Gegenstelle (TN1) auf eine Gegenstelle aus einer geschlossenen Gruppe von möglichen ersten Gegenstellen beschränkt ist, oder
(b) der Aufbau der Verbindung zur ersten Gegenstelle (TN1) zu einer beliebigen, über das Funknetz erreichbaren Gegenstelle aufgebaut wird.

2. Verfahren nach Anspruch 1, bei dem für den Aufbau der Verbindung zu der ersten Gegenstelle (TN1) der Notrufmechanismus verwendet wird.

3. Funkmodul (MD) zum Betrieb in einem Funknetz (MN) mit Zugangsberechtigungsprüfung, in dem für diese Zugangsberechtigungsprüfung ein Teilnehmeridentifikationsmodul (SIM) verwendet wird, wobei das Funkmodul ausgebildet ist, das Teilnehmeridentifikationsmodul ohne Eingabe einer Benutzeridentifikationskennung (PIN) durch einen Benutzer zu aktivieren,
das Funkmodul ausgebildet ist, zur Aufnahme des Funkmoduls in das Funknetz (MN) eine Verbindung (CON1) zu einer ersten Gegenstelle (TN1) aufzubauen, die eine Benutzeridentifikationskennung (PIN) an das anrufende Funkmodul (MD) übermittelt, und dass das Funkmodule ausgebildet ist, diese übermittelte Benutzeridentifikationskennung (PIN) zur Aktivierung (T1) des Teilnehmeridentifikationsmoduls (SIM) für Verbindungsaufbauten (CON2) zu anderen Gegenstellen (TN) zu verwenden,
**dadurch gekennzeichnet, dass**
die Verbindungen (CON1, CON2) zu den Gegenstellen (TN1, TN) über das Funknetz (MN) aufbaubare Verbindungen sind, und
(a) das Funkmodul ausgebildet ist, die Verbindung zur ersten Gegenstelle (TN1) als eine Verbindung zu einer Gegenstelle aus einer beschränkten, geschlossenen Gruppe von möglichen ersten Gegenstellen aufzubauen, und/oder
(b) das Funkmodul ausgebildet ist, den Aufbau der Verbindung zur ersten Gegenstelle (TN1) als eine Verbindung zu einer beliebigen, über das Funknetz erreichbaren ersten Gegenstelle vorzunehmen.

4. Funkmodul nach Anspruch 3, das ausgebildet ist, für den Aufbau der Verbindung zu der ersten Gegenstelle (TN1) den Notrufmechanismus zu verwenden.

## Claims

1. Method for including a radio module (MD) in a radio network (MN) with access authorization checking, in which for this access authorization checking use is made of a subscriber identification module (SIM) that can be activated without a user identification identifier (PIN) being input by a user by way of a local input device of the radio module, wherein
in order to include the radio module in the radio network (MN) a connection (CON1) to a first remote station (TN1) is set up that transmits a user identification identifier (PIN) to the calling radio module (MD), and in that
this transmitted user identification identifier (PIN) is used to activate (T1) the subscriber identification module (SIM) for setting up connections (CON2) to other remote stations (TN),
**characterised in that**
the connections (CON1, CON2) to the remote stations (TN1, TN) are set up by way of the radio network (MN), and
(a) the set-up of the connection to the first remote station (TN1) is limited to a remote station from a closed group of possible first remote stations, or
(b) the set-up of the connection to the first remote station (TN1) is set up to any remote station that can be reached by way of the radio network.

2. Method according to claim 1, in which the emergency call mechanism is used for the set-up of the connection to the first remote station (TN1).

3. A radio module (MD) for operation in a radio network (MN) with access authorization checking, in which for this access authorization checking use is made of a subscriber identification module (SIM), wherein the radio module is designed to activate the subscriber identification module without a user identification identifier (PIN) being input by a user,
the radio module is designed, for the purpose of including the radio module in the radio network (MN), to set up a connection (CON1) to a first remote station (TN1) that transmits a user identification identifier (PIN) to the calling radio module (MD), and in that
the radio module is designed to use this transmitted user identification identifier (PIN) for the activation (T1) of the subscriber identification module (SIM) for connection set-ups (CON2) to other remote stations (TN),
**characterised in that**
the connections (CON1, CON2) to the remote stations (TN1, TN) are connections that can be set up by way of the radio network (MN), and
(a) the radio module is designed to set up the connection to the first remote station (TN1) as a connection to a remote station from a limited, closed group of possible first remote stations, and/or
(b) the radio module is designed to effect the set-up of the connection to the first remote station (TN1) as a connection to any first remote station that can be reached by way of the radio network.

4. A radio module according to claim 3 that is designed to use the emergency call mechanism for setting up the connection to the first remote station (TN1).

## Revendications

1. Procédé pour la réception d'un module radio (MD) dans un réseau radio (MN) avec contrôle d'autorisation d'accès, dans lequel, pour ce contrôle d'autorisation d'accès, il est utilisé un module d'identification d'abonné (SIM) activable sans saisie d'un code d'identification d'utilisateur (PIN) par un utilisateur, par l'intermédiaire d'un dispositif de saisie local du module radio, où
pour la réception du module radio (MD) dans le réseau radio (MN), une communication (CON1) avec un premier central correspondant (TN1) est établie, transmettant un code d'identification d'utilisateur (PIN) au module radio (MD) appelant, et en ce que
ce code d'identification d'utilisateur (PIN) transmis est utilisé pour l'activation (T1) du module d'identification d'abonné (SIM) pour un établissement de communications (CON2) avec d'autres centraux correspondants (TN),
**caractérisé en ce que**
les communications (CON1, CON2) vers les centraux correspondants (TN1, TN) sont établies par l'intermédiaire du réseau radio (MN), et
(a) l'établissement de la communication avec le premier central correspondant (TN1) est limité à un central correspondant issu d'un groupe fermé de premiers centraux correspondants possibles, ou
(b) l'établissement de la communication avec le premier central correspondant (TN1) est établie avec un central correspondant quelconque, accessible par le réseau radio.

2. Procédé selon la revendication 1, dans lequel le mécanisme d'appel de secours est utilisé pour l'établissement de la communication avec le central correspondant (TN1).

3. Module radio (MD) pour un fonctionnement dans un réseau radio (MN) avec contrôle d'autorisation d'accès, dans lequel, pour ce contrôle d'autorisation d'accès, est utilisé un module d'identification d'abonné (SIM), le module radio étant réalisé pour activer le module d'identification d'abonné sans saisie d'un code d'identification d'utilisateur (PIN) par un utilisateur,
le module radio étant réalisé pour la réception du module radio dans le réseau radio (MN), pour établir une communication (CON1) avec un premier central correspondant (TN1), transmettant un code d'identification d'utilisateur (PIN) au module radio (MD) appelant, et en ce que
le module radio est réalisé pour utiliser ce code d'identification utilisateur (PIN) transmis pour l'activation (T1) du module d'identification d'abonné (SIM) pour un établissement de communications (CON2) avec d'autres centraux correspondants (TN),
**caractérisé en ce que**
les communications (CON1, CON2) vers les centraux correspondants (TN1, TN) sont des communications pouvant être établies par l'intermédiaire du réseau radio (MN), et
(a) le module radio est réalisé pour accomplir l'établissement de la communication avec le premier central correspondant (TN1) en tant qu'une communication avec un central correspondant issu d'un groupe fermé, limité, de premiers centraux correspondants possibles, et/ou
(b) le module radio est réalisé pour accomplir l'établissement de la communication avec le premier central correspondant (TN1) en tant qu'une communication avec un premier central correspondant quelconque, accessible par le réseau radio.

4. Module radio selon la revendication 3, réalisé pour utiliser le mécanisme d'appel de secours pour l'établissement de la communication avec le premier central correspondant (TN1).
